# EUROPEAN PATENT SPECIFICATION

(11) **EP 1 558 788 B1**
(45) Date of publication and mention of the grant of the patent: **01.01.2014**
(21) Application number: 03758965.2
(22) Date of filing: 28.10.2003
(51) Int. Cl.: C23F 13/00, F28F 1/30, F28F 1/32, F28F 19/06

(54) **PROCESS FOR FABRICATING A HEAT EXCHANGER**
VERFAHREN ZUR HERSTELLUNG EINES WÄRMETAUSCHERS
PROCÉDÉ DE FABRICATION D'UN ÉCHANGEUR THERMIQUE

(30) Priority: 30.10.2002 JP 2002315133; 26.11.2002 US 428923 P
(43) Date of publication of application: 03.08.2005
(73) Proprietor: Showa Denko K.K., Tokyo 105-8518 (JP)
(72) Inventor: SUDO, Takashi, c/o SHOWA DENKO K.K., Oyama-shi, Tochigi 323-8678 (JP)
(74) Representative: Joly, Jean-Jacques
(86) International application number: PCT/JP2003/013748
(87) International publication number: WO 2004/040038

(56) References cited:
- EP-A1- 0 659 519
- JP-A- 4 309 795
- JP-A- 10 081 931
- US-A- 5 148 862
- US-A- 5 292 595
- US-A- 5 351 750
- US-B1- 6 193 140

## Description

### CROSS REFERENCE TO RELATED APPLICATIONS

This application is an application filed under 35 U.S.C. §111(a) claiming the benefit pursuant to 35 U.S.C. §119(e) (1) of the filing data of Provisional Application No. 60/428,923 filed November 26, 2002 pursuant to 35 U.S.C. §111(b).

### TECHNICAL FIELD

The present invention relates to a process for fabricating the heat exchanger.

The term "potential" as used herein and in the appended claims refers to a potential as measured in a 5 wt. % NaCl aqueous solution having a pH of 3 using a saturated calomel electrode. Of course an atomic symbol representing a metal does not include alloys thereof.

### BACKGROUND ART

Known motor vehicle air conditioners, for example, for use with a chlorofluorocarbon refrigerant comprise a pair of headers arranged in parallel as spaced apart from each other, parallel flat heat exchange tubes joined at their opposite ends to the headers, and a corrugated fin disposed in an air passage clearances between each pair of adjacent heat exchange tubes and brazed to the pair of heat exchange tubes. The condenser is fabricated by preparing header members of aluminum or an aluminum alloy (hereinafter referred to as "aluminum" which includes both aluminum and aluminum alloy), tube members of aluminum, and fin members of a brazing sheet comprising a core of aluminum and claddings of aluminum brazing filler covering respective opposite surfaces of the core, and simultaneously brazing the header members, tube members and fin members.

With the condenser described above, there is a need to prevent pitting corrosion of the heat exchange tubes in order to preclude the leakage of the refrigerant from the tubes.

To prevent heat exchange tubes frompitting, heat exchangers have already been proposed in which the fins and the fillets formed at the brazed portions between the heat exchange tubes and the fins are given a base potential, and the fillets, fins and heat exchange tubes are made gradually nobler in potential in this order (see the publication of JP-A No. 1998-81931).

With this heat exchanger, the sacrificial corrosion effect of the fillets prevents the heat exchange tubes from pitting, further preventing corrosion of the fins.

However, with the heat exchanger disclosed in the above publication, the fillet which undergoes sacrificial corrosion permits the fin to separate from the heat exchange tube, consequently entailing the problem of impairing heat transfer between the tube and the fin to lower the heat exchange efficiency.

US 5,148,862 discloses a process for fabricating a heat exchanger according to the prior art.

An object of the present invention is to overcome the above problem and to provide a heat exchanger wherein the fins can be prevented from separating from the heat exchange tubes.

### DISCLOSURE OF THE INVENTION

The present invention provides a process for fabricating a heat exchanger according to claim 1.

The tube member main body is made from an Al alloy containing 0.3 to 0.5 mass % of Cu and 0.1 to 0.3 mass % of Mn, and the balance Al and inevitable impurities. A Zn spray layer is formed in an amount of 2 to 8 g/m².

The cladding is provided on one surface of the core preferably in a cladding ratio of 8 to 12%, more preferably 9 to 11%.

### BRIEF DESCRIPTION OF THE DRAWINGS

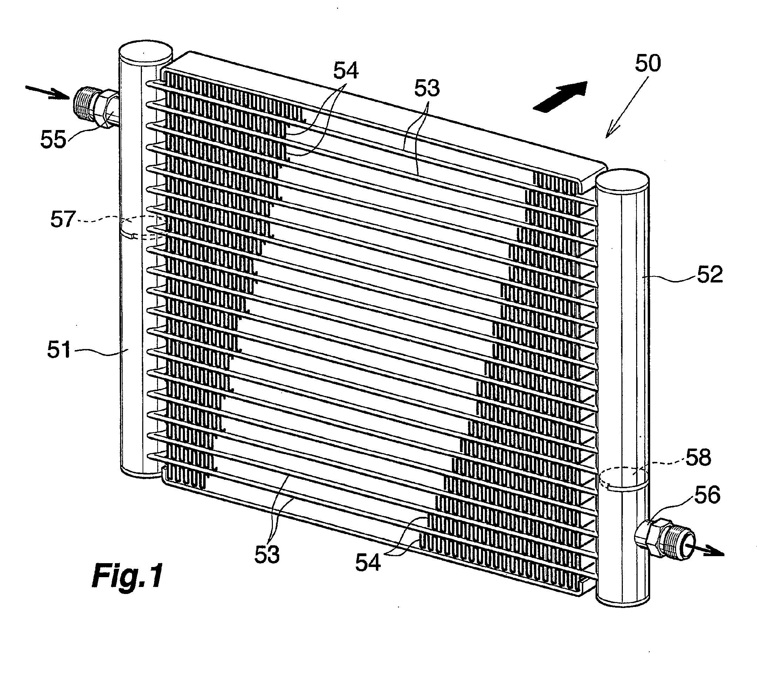

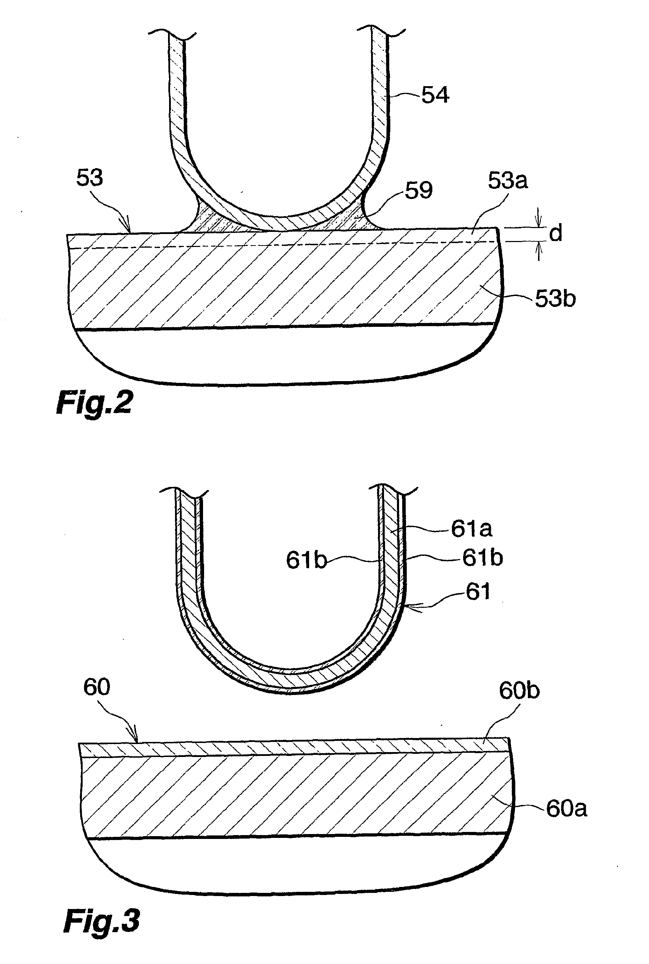

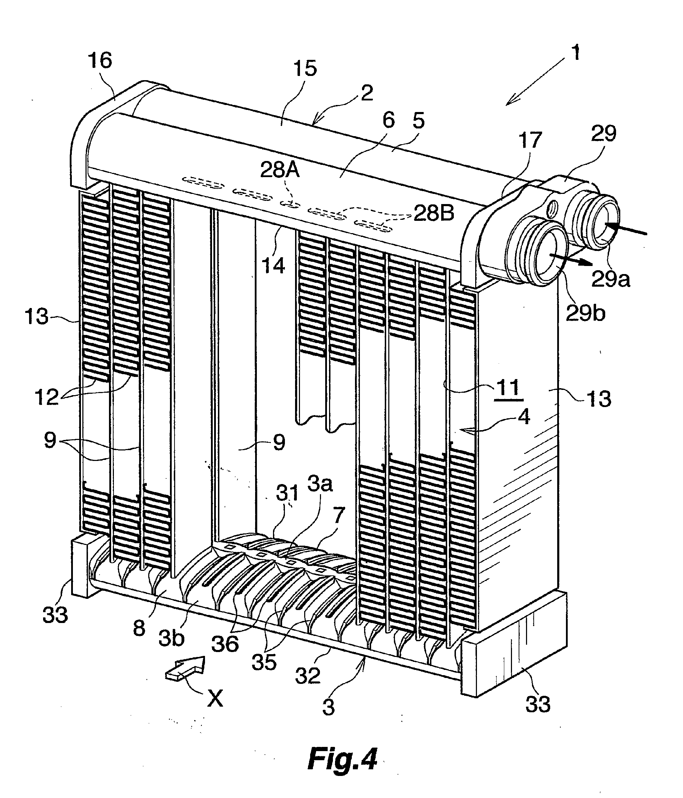

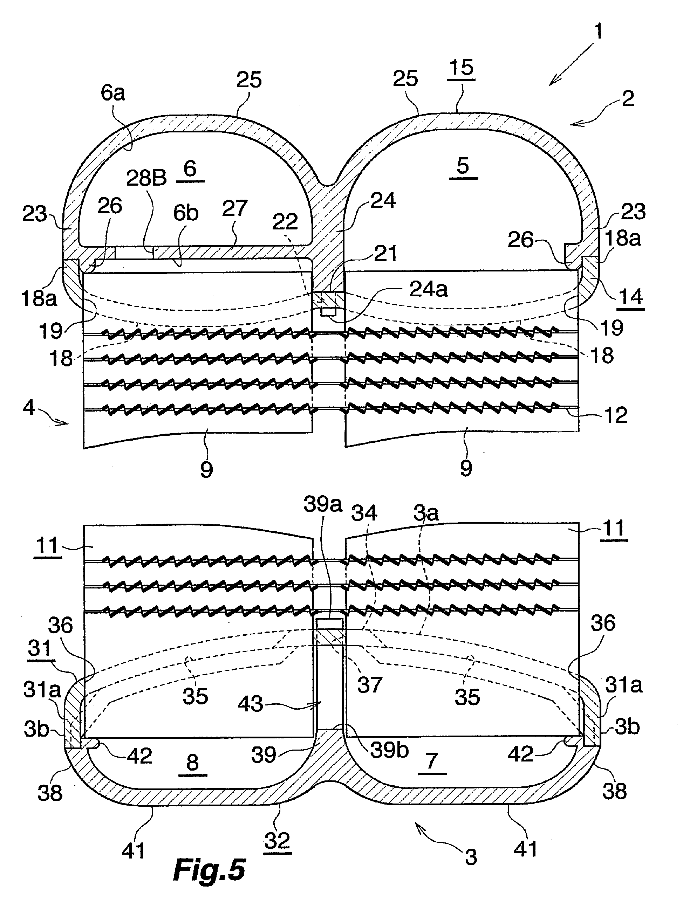

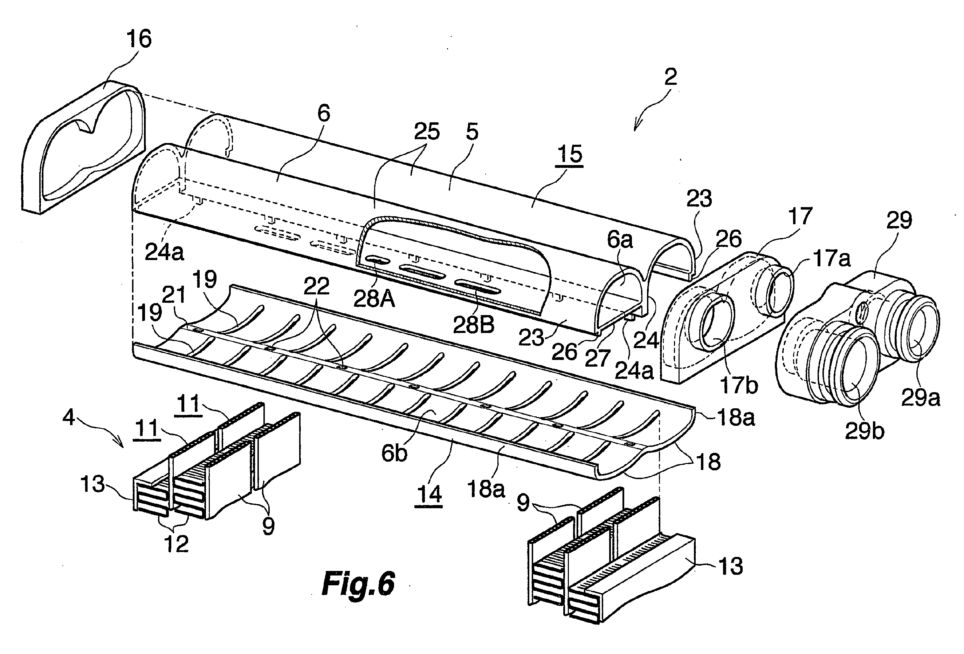

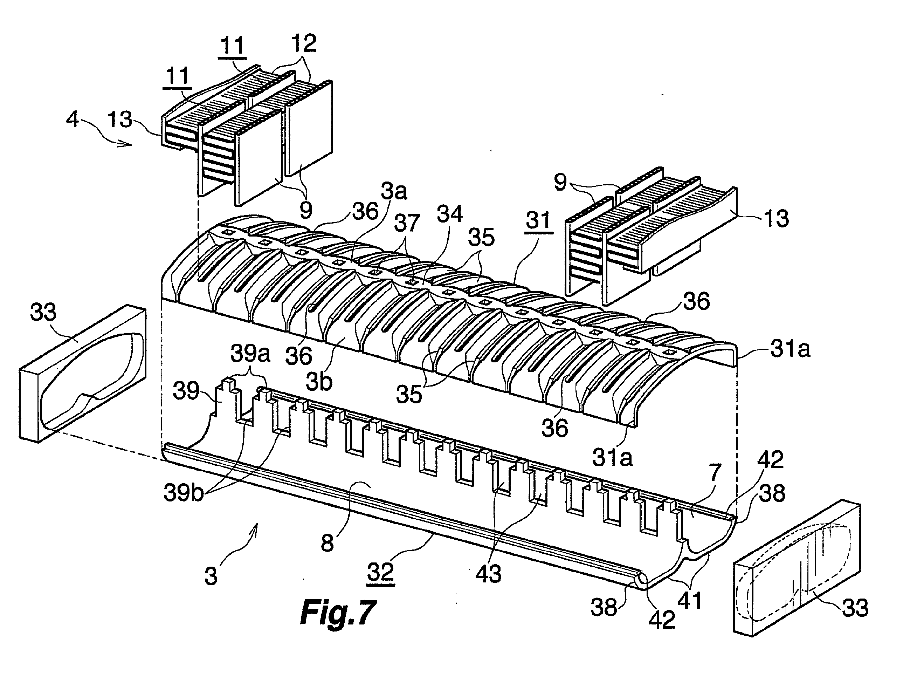

FIG. 1 is a perspective view showing a condenser for use in motor vehicle air conditioners. FIG. 2 is an enlarged view in section and showing a brazed portion of a refrigerant tube and a corrugated fin in the condenser of FIG. 1. FIG. 3 is an enlarged view in section and showing a tube member and a fin member before being brazed in a process for fabricating the condenser. FIG. 4 is a perspective view partly broken away and showing the overall construction of an evaporator embodying the invention for use in motor vehicle air conditioners. FIG. 5 is a view in vertical section, partly omitted and showing the same evaporator. FIG. 6 is an exploded perspective view of a refrigerant inlet-outlet tank of the evaporator. FIG. 7 is an exploded perspective view of a refrigerant turn tank of the evaporator.

### BEST MODE OF CARRYING OUT THE INVENTION

Embodiments of the present invention will be described below with reference to the drawings.

FIG. 1 shows a condenser for use in motor vehicle air conditioners, and FIG. 2 shows on an enlarged scale the brazed portion between a refrigerant tube and a corrugated fin. FIG. 3 shows a process for fabricating the condenser.

With reference to FIG. 1, a condenser 50 for use in motor vehicle air conditioners wherein a chlorofluorocarbon refrigerant is used comprises a pair of headers 51, 52 arranged in parallel and spaced apart from each other, parallel flat refrigerant tubes 53 (heat exchange tubes) made of aluminum extrudate and each joined at its opposite ends to the two headers 51, 52, corrugated aluminum fins 54 each disposed in an air passage clearance between the adjacent refrigerant tubes 53 and brazed to the adjacent tubes 53, an inlet pipe 55 connected to the upper end of peripheral wall of the first 51 of the headers, an outlet pipe 56 connected to the lower end of peripheral wall of the second 52 of the headers, a first partition 57 provided inside the first header 51 and positioned above the midportion thereof, and a second partition 58 provided inside the second header 52 and positioned below the midportion thereof. The refrigerant tube to be used may be an electro-resistance welded tube.

The number of refrigerant tubes 53 between the inlet pipe 55 and the first partition 57, the number of refrigerant tubes 53 between the first partition 57 and the second partition 58 and the number of refrigerant tubes 53 between the second partition 58 and the outlet pipe 56 decreasing from above downward to provide groups of channels. A refrigerant flowing into the inlet pipe 55 in a vapor phase flows zigzag through units of channel groups in the condenser before flowing out from the outlet pipe 56 in a liquid phase.

With reference to FIG. 2, suppose each of the refrigerant tubes 53 has a potential A at a surface layer portion 53a from the outermost surface of the outer periphery thereof to a depth d (= 0.15 mm) and a potential B at a portion 53b (hereinafter referred to as a "core") of the tube 53 other than the surface layer portion 53a, each of the corrugated fins 54 has a potential C, and a fillet 59 formed at the brazed portion between the refrigerant tube 53 and the fin 54 has a potential D. These potentials then have the relationship of A ≤ C ≤ D < B. More specifically, the potential A of the surface layer portion 53a of the outer periphery of the refrigerant tube 53 is -850 to -800 mV, the potential B of the core 53b of the tube 53 is -710 to -670 mV, the potential C of the corrugated fin 54 is -850 to -800 mV, and the potential D of the fillet 59 is -850 to -800 mV. When these potentials A to D have the relationship of A ≤ C ≤ D < B and are in the ranges of: the potential A, -850 to -800 mV; the potential B, -710 to -670 mV; the potential C, -850 to -800 mV; and the potential D, -850 to -800 mV, the refrigerant tube 53 can be prevented from pitting, and marked corrosion of the fillet 59 is precluded to diminish the separation of the corrugated fin 54 from the tube 53.

With the condenser described, the surface layer portion 53a of the outer periphery of the refrigerant tube 53 is made from an Al alloy containing 0.3 to 0.6 mass % of Cu, 0.1 to 0.4 mass % of Mn and 1.0 to 7.0 mass % of Zn, and the balance Al and inevitable impurities. The core 53b of the tube 53 is made from an Al alloy containing 0.3 to 0.6 mass % of Cu and 0.1 to 0.4 mass % of Mn, and the balance Al and inevitable impurities.

The Zn in the surface layer portion 53a of the outer periphery of the refrigerant tube 53 has an effect to make the potential of the surface layer portion 53a less noble to produce an increased potential difference between this portion and the core 53b, thereby permitting sacrificial corrosion of the surface layer portion 53a to give the tube 53 improved resistance to pitting corrosion. If the Zn content is less than 1.0 mass %, the metal fails to produce the above effect and to assure the tube 53 of resistance to pitting. When the content is in excess of 7.0 mass %, the surface layer portion 53a undergoes excessive corrosion to release white powder or permit the separation of the corrugated fin 54. Accordingly, the Zn content of the surface layer portion 53a should be 1.0 to 7.0 mass % and is preferably 2.0 to 3.0 mass %. The Cu content of the portion 53a is preferably 0.3 to 0.5 mass %, and the Mn content thereof is preferably 0.1 to 0.3 mass %.

The Cu in the core 53b of the refrigerant tube 53 has an effect to give a noble potential to the core 53b to increase the potential difference between the core and the surface layer portion 53a, thereby permitting sacrificial corrosion of the surface layer portion 53a to give the tube 53 improved resistance to pitting corrosion. If the Cu content is less than 0. 3 mass %, the metal fails to produce the above effect and to assure the tube 53 of resistance to pitting. When the content is in excess of 0.6 mass %, the presence of Cu which is a nobler metal than Al permits sacrificial corrosion of Al to result in impaired self-resistance to corrosion. Accordingly, the Cu content of the core 53b should be 0.3 to 0.6 mass % and is preferably 0.3 to 0.5 mass %. Like Cu, the Mn in the core 53b has an effect to give a noble potential to the core 53b to increase the potential difference between the core and the surface layer portion 53b, thereby permitting sacrificial corrosion of the surface layer portion 53a to give the tube 53 improved resistance to pitting corrosion. If the Mn content is less than 0.1 mass %, the metal fails to produce the above effect and to assure the tube 53 of resistance to pitting. When the content is in excess of 0.4 mass %, the refrigerant tube 53 will not be extrudable satisfactorily. Accordingly, the Mn content of the core 53b should be 0.1 to 0.4 mass % and is preferably 0.1 to 0.3 mass %.

The corrugated fin 54 is made from an Al alloy containing 0.9 to 2.8 mass % of Zn, 1.0 to 1.5 mass % of Mn and up to 0.15 mass % of Cu, and the balance Al and inevitable impurities.

The Zn in the corrugated fin 54 has an effect to give the fin 54 a base potential approximate to the potential of the surface layer portion 53a of the tube 53 or the fillet 59. If the Zn content is less than 0.9 mass %, the fin 54 becomes noble in potential, permitting the fillet 59 to undergo sacrificial corrosion and to separate the fin 54 off. A Zn content in excess of 2.8 mass % gives the fin a base potential, permitting the fin 54 to undergo corrosion early to result in impair heat exchange performance. Accordingly, the Zn content of the corrugated fin 54 should be 0.9 to 2.8 mass %, and is preferably 2.0 to 2.5 mass %. The Mn in the fin 54 has an effect to assure the fin 54 of its own strength. With less than 1. 0 mass % of Mn present, the fin 54 will be insufficient in strength and is liable to deformation. Mn contents in excess of 1.5 mass % give the fin 54 excessive strength to make the fin material less amenable to forming. Accordingly, the Mn content of the corrugated fin 54 should be 1.0 to 1.5 Mass % and is preferably 1.1 to 1.3 mass %. The Cu in the fin 54 lowers the self-corrosive properties of the tube 53 already mentioned and makes the potential of the fin 54 excessively nobler, consequently promoting the corrosion of the fillet 59, so that the Cu content should be up to 0.15 mass %, and is preferably up to 0.1 mass %.

The fillet 5.9 formed at the brazed portion between the refrigerant tube 53 and the corrugated fin 54 is made from an Al alloy containing 0.1 to 0.4 mass % of Cu, 0.05 to 0.3 mass % of Mn and up to 5 mass % of Zn, and the balance Al and inevitable impurities. The Cu in the fillet 59 has an effect to give the fillet 59 a noble potential approximate to the potential of the surface layer portion 53a of the tube 53 and the corrugated fin 54 and to prevent the separation of the fin 54. Cu contents less than 0.1 mass % fail to make the potential of the fillet 59 sufficiently noble, permitting corrosion of the fillet 59 to separate the fin 54 off. If the content is over 0.4 mass %, the above-mentioned self-resistance thereof to corrosion will become impaired. Accordingly, the Cu content of the fillet 59 should be 0.1 to 0.4 mass %, and is preferably 0.2 to 0.3 mass %. Like Cu, the Mn of the fillet 59 has an effect to give the fillet 59 a noble potential approximate to the potential of the surface layer portion 53a of the tube 53 and the corrugated fin 54 and to prevent the separation of the fin 54. If the Mn content is less than 0.05 mass %, the above-mentioned effect of the fillet 59 will not be fully available. If the content is over 0.3 mass %, the above-mentioned corrosion self-resistance of the fillet 59 will become impaired. Accordingly, the Mn content of the fillet 59 should be 0.05 to 0.3 mass %, and is preferably 0.1 to 0.2 mass %. Because the Zn in the fillet 59 gives a base potential to the fillet 59 to promote the corrosion of the fillet 59 and separate the fin 54 off, the Zn content should be up to 5 mass %, and is preferably up to 3 mass %. As will be described later, the heat exchange tube 53 is brazed to the fin 54 with a brazing material containing Si, so that the fillet 59 of course contains Si. This Si produces no influence on the corrosion resistance of the condenser 50, and the Si content will not be referred to in detail. Incidentally, the Si content of the fillet 59 is usually about 3.0 to about 13.0 mass %.

Because the surface layer portion 53a and the core 53b of the refrigerant tube 53, corrugated fin 54 and fillet 59 are made from the respective alloys of the foregoing compositions, the potential A of the surface layer portion 53a, the potential B of the core 53b, the potential C of the corrugated fin 54 and the potential D of the fillet can be in the relationship of A ≤ C ≤ D < B, with the potential A ranging from -850 to -800 mV, the potential B from -710 to -670 mV, the potential C from -850 to -800 mV and the potential D from -850 to -800 mV.

The condenser 50 is fabricated in the following manner.

First prepared are a plurality of refrigerant tube members 60 (heat exchanger tube members), a plurality of corrugated fin members 61, and a pair of aluminum header members (not shown) each having tube member inserting holes equal in number to the number of tube members 60.

As shown in Fig. 3, the refrigerant tube member 60 comprises a tubular main body 60a made of an aluminum extrudate which is prepared from an Al alloy containing 0.3 to 0.6 mass % of Cu and 0.1 to 0.4 mass % of Mn, and the balance Al and inevitable impurities, and 2 to 8 g/m² of a Zn spray layer 60b formed over the entire outer peripheral surface of the tubular main body 60a.

The Cu in the tubular main body 60s has an effect to give a noble potential to the core 53b of the refrigerant tube 53 of the condenser 50 fabricated to increase the potential difference between the core and the surface layer portion 53a, thereby permitting sacrificial corrosion of the surface layer portion 53a to give the tube 53 improved resistance to pitting corrosion. However, if the Cu content is less than 0. 3 mass %, the metal fails to produce the above effect and to assure the tube 53 made from the refrigerant tube member 60 of resistance to pitting. When the content is in excess of 0.6 mass %, the refrigerant tube 53 made of the tube member 60 will be impaired in self-resistance to corrosion. Accordingly, the Cu content of the tubular main body 60a should be 0.3 to 0.6 mass % and is preferably 0.3 to 0.5 mass %. The Mn in the tubular main body 60a has an effect to give a noble potential to the core 53b of the refrigerant tube 53 of the condenser 50 to be fabricated to increase the potential difference between the core and the surface layer portion 53b, thereby permitting sacrificial corrosion of the surface layer portion 53a to give the tube 53 improved resistance to pitting corrosion. If the Mn content is less than 0.1 mass %, the metal fails to produce this effect and to assure the tube 53 of resistance to pitting. When the content is in excess of 0.4 mass %, the tubular main body 60a will not be extrudable satisfactorily. Accordingly, the Mn content of the main body 60a should be 0.1 to 0.4 mass % and is preferably 0.1 to 0.3 mass %.

The Zn in the Zn spray layer 60b diffuses into the outer peripheral surface of the tubular main body 60a during brazing to be described below, exhibiting an effect to give a base potential to the surface layer portion 53a of the refrigerant tube 53 to be made of the refrigerant tube member 60, permitting sacrificial corrosion of this portion and preventing the tube 53 from pitting. However, if the spray layer is formed in an amount of less than 2 g/m², this effect is unavailable, whereas if the amount is in excess of 8 g/m², Zn will diffuse into the fillet 59, giving a base potential to the fillet 59 and rendering the corrugated fin 54 liable to separate from the refrigerant tube 53. Accordingly, the Zn spray layer should be formed in an amount of 2 to 8 g/m², preferably in an amount of 2 to 6 g/m².

The corrugated fin member 61 comprises a core 61a made from an Al alloy containing 0.9 to 2.8 mass % of Zn, 1.0 to 1.5 mass % of Mn and up to 0.03 mass % of Cu, and the balance Al and inevitable impurities, and a cladding 61b covering each of opposite surfaces of the core 61a and made from an Al alloy brazing filler containing 7.9 to 9.5 mass % of Si, 0.1 to 0.4 mass % of Cu and 0.1 to 0.3 mass % of Mn, and the balance Al and inevitable impurities. The cladding 61b is provided on one surface of the core 61a in a ratio of 8 to 12%. If the cladding ratio is less than the lower limit value, it is likely that the alloy brazing filler will melt out from the cladding 61b in an amount insufficient to braze the corrugated fin member 61 to the refrigerant tube member 60. When the ratio is in excess of the upper limit value, an excess of the brazing filler will give rise to erosion. The cladding ratio is preferably 9 to 11%.

The Zn in the core 61a of the corrugated fin member 61 produces an effect to control the potential of the corrugated fin 54 of the condenser 50 to be fabricated to a level approximate to the potential of the surface layer portion 53a of the refrigerant tube 53 and the fillet 59. If the Zn content is less than 0.9 mass %, an excessively nobler potential will be given to the corrugated fin 54, whereas Zn contents over 2.8 mass % will lower the corrosion resistance of the fin 54. Accordingly, the Zn content of the core 61a should be 0.9 to 2.8 mass % and is preferably 2.3 to 2.7 mass %. The Mn in the core 61a produces an effect to increase the strength of the corrugated fin 54 to be made of the fin member 61, whereas if the content is less than 1.0 mass %, the fin 54 will have an insufficient strength. If the content is over 1.5 mass %, difficulty will be encountered in forming the fin member 61. Accordingly, the Mn content of the core 61a should be 1.0 to 1.5 mass %, and is preferably 1.1 to 1.3 mass %. The Cu in the core 61a gives a noble potential to the corrugated fin 54 to be made of the fin material 61 and included in the condenser 50 fabricated, causes promoted sacrificial corrosion of the fillet 59 and impairs the self-resistance of the fin 54 to corrosion. The Cu content should therefore be up to 0.03 mass %.

The cladding 61b of the fin member 61 contains Si as an element required for the cladding 61b to serve as a brazing material, and the Si content should be 7.9 to 9.5 mass %. The Cu in the cladding 61b has an effect to make the potential of the fillet 59 noble, whereas this effect is not available if the content is less than 0.1 mass %. Presence of more than 0.4 mass % of Cu permits intergranular corrosion to entail lower self-resistance to corrosion. Accordingly, the Cu content of the cladding 61b should be 0.1 to 0.4 mass %, and is preferably 0.1 to 0.3 mass %. The Mn in the cladding 61b has an effect to make the potential of the fillet 59 noble, but if the content is less than 0.1 mass %, this effect is unavailable. When the content is in excess of 0.3 mass %, intergranular corrosion occurs to result in impaired self-resistance to corrosion. Accordingly, the Mn content of the cladding 61b should be 0.1 to 0.3 mass %.

The pair of header members are then arranged as spaced apart, the refrigerant tube members 60 and corrugated fin members 61 are arranged alternately, and opposite ends of the tube members 60 are inserted into the tube member inserting holes of the header members. A fluoride flux (having a composition similar to a eutectic composition of potassium fluoride and aluminum fluoride) was thereafter applied to these components. The resulting assembly is heated to a predetermined temperature in a nitrogen gas atmosphere, whereby the refrigerant tube members 60 are brazed to the header members utilizing the brazing material layer on the header members, and each pair of adjacent refrigerant tube members 60 to the corrugated fin member 61 disposed therebetween at the same time utilizing the cladding 61b of the fin member 61. In this way, a condenser 50 is fabricated for use in motor vehicle air conditioners.

The condenser and a compressor and evaporator provide a refrigeration cycle wherein a chlorofluorocarbon refrigerant is used and which is installed in a vehicle, such as a motor vehicle.

Specific examples and comparative examples are given below.

### Example 1

Refrigerant tube members 60 were produced each by extruding an alloy having the composition shown in Table 1 into a tubular main body 60a and forming a Zn spray layer 60b in an amount of 4 g/m² over the entire outer peripheral surface of the main body 60a. Also produced were corrugated fin members 61 each comprising a core 61a and a cladding 61b covering each of opposite surfaces of the core 61a, the core and the cladding having the respective compositions shown in Table 2. In the corrugated fin member 61, the cladding ratio of the cladding 61b on one surface of the core 61a was 10%. Also prepared were suitable header members.

**Table 1**

| | Composition (mass %) | | | | | | | | |
|---|---|---|---|---|---|---|---|---|---|
| Example | Al | Cu | Mn | Si | Fe | Mg | Cr | Zn | Ti |
| Ex.1 | Bal. | 0.49 | 0.29 | 0.06 | 0.15 | 0.01 | <0.01 | 0.01 | 0.01 |
| Comp. Ex.1 | Bal. | 0.15 | 0.02 | 0.10 | 0.21 | 0.01 | <0.01 | <0.01 | 0.01 |
| Comp. Ex.2 | Bal. | 0.40 | 0.19 | 0.05 | 0.17 | 0.01 | 0.01 | 0.01 | 0.01 |

**Table 2**

| | | Composition (mass %) | | | | | | | |
|---|---|---|---|---|---|---|---|---|---|
| | | Al | Si | Fe | Cu | Mn | Mg | Zn | Ti |
| Example 1 | Core | Bal. | 0.35 | 0.17 | <0.01 | 1.2 | <0.01 | 1.1 | <0.01 |
| | Cladding | Bal. | 8.8 | 0.16 | 0.3 | 0.1 | <0.01 | 0.02 | <0.01 |
| Comp. Ex. 1 | Core | Bal. | 0.35 | 0.20 | <0.01 | 1.2 | <0.01 | 1.2 | <0.01 |
| | Cladding | Bal. | 8.9 | 0.20 | <0.01 | <0.01 | <0.01 | 1.2 | <0.01 |
| Comp. Ex. 2 | Core | Bal. | 0.36 | 0.18 | <0.01 | 1.2 | <0.01 | 1.1 | <0.01 |
| | Cladding | Bal. | 8.8 | 0.19 | <0.01 | 0.01 | <0.01 | <0.01 | 0.01 |

Subsequently, the refrigerant tube members 60, corrugated fins 61 and header members were assembled in the same manner as in the foregoing embodiment, a fluoride flux (composition similar to a eutectic composition of potassium fluoride and aluminum fluoride) was applied to the assembly and the resulting assembly was heated to a predetermined temperature in a nitrogen gas atmosphere, whereby the refrigerant tube members 60 were brazed to the header members utilizing the brazing material layer on the header members, and each pair of adj acent refrigerant tube members 60 to the corrugated fin member 61 disposed therebetween at the same time utilizing the cladding 61b of the fin member 61. In this way, a condenser 50 was fabricated for use in motor vehicle air conditioners.

Table 3 shows the composition and potential of the surface layer portion 53a of the outer periphery of the refrigerant tube 53 of the condenser 50, from the surface of the periphery to a depth of 0.15 mm, the composition and potential, of the corrugated fins 54, and the composition and potential of the fillets 59 formed by brazing. Incidentally, the core 53b of the refrigerant tube 53 of the condenser 50 had the same composition as the tubular main body 60a shown in Table 1 and before brazing, and had a potential of -690 mV.

**Table 3**

| | | Composition (mass %) | | | | |
|---|---|---|---|---|---|---|
| | | Al | Cu | Mn | Zn | Potential (mV) |
| | Tube surface layer | Balance | 0.49 | 0.29 | 1.7 | -840 |
| Example 1 | Fin | Balance | 0.07 | 1.1 | 1.1 | -840 |
| | Fillet | Balance | 0.30 | 0.1 | 2.7 | -830 |
| | Tube core | Balance | 0.49 | 0.29 | - | -690 |
| | Tube surface layer | Balance | 0.10 | <0.01 | 3.0 | -950 |
| Comp. Ex. 1 | Fin | Balance | 0.10 | 1.2 | 1.1 | -900 |
| | Fillet | Balance | <0.01 | 0.1 | 3.6 | -960 |
| | Tube core | Balance | 0.10 | 0.01 | - | -730 |
| | Tube surface layer | Balance | 0.39 | 0.22 | 2.2 | -830 |
| Comp. Ex. 2 | Fin | Balance | 0.04 | 1.1 | 1.2 | -840 |
| | Fillet | Balance | <0.01 | 0.1 | 3.9 | -920 |
| | Tube core | Balance | 0.40 | 0.23 | - | -695 |

### Comparative Example 1

Refrigerant tube members were produced each by extruding JIS A1100 having the composition shown in Table 1 into a tubular main body of the same shape as in Example 1 and forming a Zn spray layer in an amount of 10 g/m² over the entire outer peripheral surface of the main body. Also produced were corrugated fin members each comprising a core and a cladding covering each of opposite surfaces of the core, the core and the cladding having the respective compositions shown in Table 2. In the corrugated fin, the cladding ratio of the cladding on one surface of the core was 10%.

A condenser for use in motor vehicle air conditioners was subsequently fabricated in the same manner as in Example 1 using the tube members, the corrugated fin members and suitable header members.

Table 3 shows the composition and potential of the surface layer portion of the outer periphery of the refrigerant tube of the condenser fabricated, from the surface of the periphery to a depth of 0.15 mm, the composition and potential of the corrugated fins after brazing, and the composition and potential of the fillets formed by brazing. After brazing, the portion of the tube other than the surface layer portion thereof had the same composition as JIS A1100 and a potential of -730 mV.

### Comparative Example 2

Refrigerant tube members were produced each by extruding an alloy having the composition shown in Table 1 into a tubular main body of the same shape as in Example 1 and forming a Zn spray layer in an amount of 4 g/m² over the entire outer peripheral surface of the main body. Also produced were corrugated fin members each comprising a core and a cladding covering each of opposite surfaces of the core, the core and the cladding having the respective compositions shown in Table 2. In the corrugated fin, the cladding ratio of the cladding on one surface of the core was 10%.

A condenser for use in motor vehicle air conditioners was subsequently fabricated in the same manner as in Example 1 using the tube members, the corrugated fin members and suitable header members.

Table 3 shows the composition and potential of the surface layer portion of the outer periphery of the refrigerant tube of the condenser fabricated, from the surface of the periphery to a depth of 0.15 mm, the composition and potential of the corrugated fins after brazing, and the composition and potential of the fillets formed by brazing. After brazing, the portion of the tube other than the surface layer portion thereof had the same composition as given in Table 1 and a potential of -690 mV.

### Evaluation Test

The condensers of Example 1 and Comparative Examples 1 and 2 for use in motor vehicle air conditioners were subjected to an acid environment corrosion test (40 days) and a salt-dry-wet-cold-heat cycle test (168 days). Some refrigerant tubes were thereafter cut out from each condenser, and the corrugated fin was cut off at a location about 5 mm away from the brazed joint between the fin and each of the tubes (i.e., at a location about 5 mm upwardly away from the upper surface of the tube 53 in FIG. 2) to measure the length of the fin remaining brazed to the tube relative to the entire length of the brazed joint of the fin and the tube and to determine the fin joint remaining ratio. Table 4 shows the result.

**Table 4**

| | Fin joint remaining ratio (%) | |
|---|---|---|
| | Acid environment test | Salt-dry-wet-cold-heat cycle test |
| Ex. 1 | 60-75 | 85-95 |
| Comp. Ex.1 | 0-5 | 0-5 |
| Comp. Ex.2 | 25-45 | 50-70 |

FIGS. 4 to 7 show an evaporator for use in motor vehicle air conditioners. In the following description, the upper and lower sides and left-hand and right-hand sides of FIG. 4 will be referred to respectively as "upper," "lower," "left" and "right," and the downstream side of an air passage clearance between each pair of adjacent heat exchange tubes in a group of heat exchange tubes (i.e., the direction indicated by an arrow X in FIG. 4, and the right-hand side of FIG. 5) will be referred to as "front," and the opposite side as "rear."

With reference to FIG. 4, an evaporator 1 for use in motor vehicle air conditioners wherein a chlorofluorocarbon refrigerant is used comprises a refrigerant inlet-outlet tank 2 of aluminum and a refrigerant turn tank 3 which are vertically spaced apart, and a heat exchange core 4 provided between the two tanks 2, 3.

The refrigerant inlet-outlet tank 2 comprises a refrigerant inlet header 5 positioned at the front side (downstream side with respect to the flow of air) and a refrigerant outlet header 6 positioned at the rear side (upstream side with respect to the flow of air). The refrigerant turn tank 3 comprises a refrigerant inflow header 7 at the front side and a refrigerant outflow header 8 at the rear side.

The heat exchange core 4 comprises a plurality of heat exchange tube groups 11, i.e., two groups 11 in the present embodiment, arranged as front and rear groups, each heat exchange group 11 comprising a plurality of heat exchange tubes 9 arranged side by side laterally, i.e., leftward or rightward, at a spacing. A corrugated fin 12 is provided in an air passage clearance between each pair of adjacent heat exchange tubes 9 of each group 11, as well as on the outer side of the heat exchange tubes 9 at each of the left and right ends, and is brazed to the tubes. An aluminum side plate 13 is disposed on the outer side of the fin 12 at each of the left and right ends and brazed to the fin 12. The heat exchange tubes 9 of the front group 11 have their upper and lower ends joined respectively to the inlet header 5 and the inflow header 7. The heat exchange tubes 9 of the rear group 11 have their upper and lower ends joined respectively to the outlet header 6 and the outflow header 8.

With reference to FIGS. 5 and 6, the refrigerant inlet-outlet tank 2 comprises a platelike first member 14 made of an aluminum brazing sheet having a blazing material layer over opposite sides and having the heat exchange tubes 9 joined thereto, a second member 15 covering the upper side of the first member 14 and made from a bare member in the form of an aluminum extrudate, and aluminum caps 16, 17 closing left and right end openings, respectively.

The first member 14 has front and rear curved portions 18 bulging downward at its center in the form of a circular arc of small curvature in cross section. Each of the curved portions 18 has a plurality of tube inserting slits 19 elongated forward or rearward and arranged at a spacing laterally. The corresponding slits 19 of the front and rear curved portions 18 are in the same position with respect to the lateral direction. The front edge of the front curved portion 18 and the rear edge of the rear curved portion 18 each have an upstanding wall 18a formed integrally with the portion 18 and extending over the entire length of the member 14. A flat portion 21 of the first member 14 between the two curved portions 18 has a plurality of through holes 22 arranged at a spacing laterally.

The second member 15 is generally m-shaped in cross section, is opened downward and comprises front and rear two walls 23 extending laterally, a partition wall 24 provided between the two walls 23 centrally of the member 15, extending laterally and dividing the interior of the tank 2 into front and rear two spaces, and two circular-arc walls 25 bulging upward and integrally connecting the upper end of the partition wall 14 to the upper ends of the respective front and rear walls 23. Opposite side edges of the second member 15, i.e., the lower edges of the front and rear walls 23, are each integrally provided with a tube retaining lug 26 projecting inwardly of the header 5 or 6 and toward the first member 14 (downward) and extending over the entire length of the member 15. The front upper portion of the rear tube retaining lug 26 and a lower end portion of the partition wall 24 are integrally interconnected by a flow dividing resistance plate 27 over the entire length of the member 15. The rear portion of the plate 27 other than the left and right opposite end portions thereof is provided with refrigerant passage slots 28A, 28B as arranged longitudinally of the member 15 at a spacing. The lower end of the partition wall 24 extends downward beyond the lower ends of the front and rear walls 23 and is integrally provided at its lower edge with a plurality of projections 24a arranged at a spacing longitudinally of the member 15 and to be fitted into the respective through holes 22 of the first member 14. The projections 24a are formed by cutting out specified portions of the partition wall 24.

The caps 16, 17 are each made from a bare member as by press work, forging or cutting and are provided on the lateral inner sides thereof with recessed portions to be fitted over the left ends and right ends of the first and second members 14, 15. The right cap 17 has a refrigerant admitting opening 17a communicating with the interior of the inlet header 5 and a refrigerant discharge opening 17b communicating with the upper portion of the interior of the outlet header 6 above the resistance plate 27. Brazed to the right cap 17 is a refrigerant inlet-outlet member 29 made of aluminum and having a refrigerant inlet 29a in communication with the admitting opening 17a and a refrigerant outlet 29b in communication with the discharge opening 17b.

The projections 24a of the second member 15 are inserted into the respective through holes 22 of the first member 14, followed by crimping, whereby the upper ends of the front and rear upstanding walls 18a of the first member 14 are caused to butt against the lower ends of the front and rear walls 23 of the second member 15, with the front and rear inner faces of the two upstanding walls 18a in contact with the front and rear outer faces of the tube retaining lugs 26. The two members 14, 15 are brazed to each other in this state utilizing the brazing material layer of the first member 14. The two caps 16, 17 are further brazed to the first and second members 14, 15 with a brazing material sheet. In this way, the refrigerant inlet-outlet tank 2 are fabricated. The portion of the tank 2 positioned forwardly of the partition wall 24 of the second member 15 serves as the refrigerant inlet header 5, and the portion of the tank positioned rearwardly of the wall 24 as the refrigerant outlet header 6. The outlet header 6 is divided by resistance plate 27 into upper and lower spaces 6a, 6b which are held in communication with each other by the refrigerant passage slots 28A, 28B. The discharge opening 17b of the right cap 17 communicates with the upper space 6a of the outlet header 6.

With reference to FIGS. 5 and 7, the refrigerant turn tank 3 comprises a platelike first member 31 made of an aluminum brazing sheet having a blazing material layer over opposite sides and having the heat exchange tubes 9 joined thereto, a second member 32 covering the lower side of the first member 31 and made from a bare member in the form of an aluminum extrudate, and aluminum caps 33 closing left and right end openings, respectively.

The refrigerant turn tank 3 has a top surface 3a in the form of a circular arc in cross section so as to have the highest portion 34 at the center thereof with respect to the forward or rearward direction and to gradually extend downward from the highest portion 34 toward the front and rear opposite sides. The front and rear side portions of the tank 3 have grooves 35 extending from the front and rear opposite sides of the highest portion 34 of the top surface 3a to the front and rear opposite side surfaces 3b and arranged at a spacing longitudinally of the tank 3.

The first member 31 has a circular-arc cross section bulging upward at its center with respect to the forward or rearward direction and has walls 31a extending downward from the front and rear opposite side edges of the member 31 integrally therewith over the entire length thereof. The upper surface of the first member 31 is the top surface 3a of the turn tank 3, and the outer surfaces of the downward walls 31a provide the front and rear side surfaces 3b of the tank 3. The grooves 35 are formed in the front and rear sides of the first member 31 and extend from the highest portion 34 at its center with respect to the forward or rearward direction to the lower ends of the downward walls 31a. A tube inserting slit 36 extending forward or rearward is formed between each pair of adjacent grooves 35 in each of the front and rear portions other than the highest portion 34 in the center of the first member 31. The corresponding front and rear tube inserting slits 36 in each pair are in the same position with respect to the lateral direction. The highest portion 34 of the first member 31 in its center with respect to the forward or rearward direction has a plurality of through holes 37 formed therein as arranged at a spacing laterally. The first member 31 has its downward walls 31a, grooves 35, tube inserting slits 36 and through holes 37 formed at the same time by subjecting an aluminum brazing sheet to press work.

The second member 32 is generally w-shaped in cross section, is opened upward and comprises front and rear two walls 38 curved upward forwardly or rearwardly outward and extending laterally, a vertical partition wall 39 provided between the two wall 38 centrally of the member 32, extending laterally and dividing the interior of the refrigerant return tank 3 into front and rear two spaces, and two walls 41 integrally connecting the lower end of the partition wall 39 to the lower ends of the respective front and rear walls 38. The front and rear side edges of the second member 32, i.e., the upper edges of the front and rear walls 38, are each integrally provided with a tube retaining lug 42 projecting inwardly of the header 7 or 8 and toward the first member 31 (upward) and extending over the entire length of the member 32. The upper end of the partition wall 39 extends upward beyond the upper ends of the lugs 42 and is integrally provided at its upper edge with a plurality of projections 39a arranged at a spacing laterally and to be fitted into the respective through holes 37 of the first member 31. Formed in the partition wall 39 between each pair of adjacent projections 39a is a refrigerant passage cutout 39b extending from the upper edge. The projections 39a and cutouts 39b are formed by cutting out specified portions of the partition wall 39.

The second member 32 is produced by integrally forming the front and rear two walls 38, partition wall 39, connecting walls 41 and tube retaining lugs 42 by extrusion, and thereafter forming the projections 39a and cutouts 39b by cutting the partition wall 39.

The caps 33 are each made from a bare member as by press work, forging or cutting and are provided on the lateral inner sides thereof with recessed portions to be fitted over the left ends and right ends of the first and second members 31, 32.

The projections 39a of the second member 32 are inserted into the respective through holes 37, followed by crimping, whereby the lower ends of the front and rear downward walls 31a of the first member 31 are caused to butt against the upper ends of the front and rear walls 38 of the second member 32, with the front and rear inner faces of the two downward walls 31a in contact with the front and rear outer faces of the tube retaining lugs 42. The two members 31, 32 are brazed to each other in this state utilizing the brazing material layer of the first member 31. The two caps 33 are further brazed to the first and second members 31, 32 with a brazing material sheet. In this way, the refrigerant return tank 3 are fabricated. The portion of the tank 3 positioned forwardly of the partition wall 39 of the second member 32 serves as the refrigerant inflow header 7, and the portion of the tank positioned rearwardly of the wall 39 as the refrigerant outflow header 8. The upper-end openings of the cutouts 39b in the partition wall 39 of the second member 32 are closed with the first member 31, whereby refrigerant passage holes 43 are formed.

The heat exchange tubes 9 of the front and rear groups 11 comprise aluminum extrudates, have a large width and are flat along the forward or rearward direction, and each have inside thereof a plurality of refrigerant channels extending longitudinally of the tube and arranged in parallel. Each heat exchange tube 9 has an upper end portion thereof brazed to the first member 14 of the refrigerant inlet-outlet tank 2 utilizing the brazing material layer of the first member 14, with its upper end inserted through the slit 19 of the first member 14 and with its upper end face in contact with the tube retaining lug 26. The lower end of the heat exchange tube 9 is inserted through the slit 36 of the first member 31 of the refrigerant turn tank 3, with its lower end face in bearing contact with the tube retaining lug 42, and in this state, a lower end portion of the tube is brazed to the first member 31 utilizing the brazing material layer of the member 31.

The heat exchange tube 9, which is made of an aluminum extrudate, may alternatively comprise an aluminum electro-resistance welded tube which has an inner fin inserted therein to form a plurality of refrigerant channels. Further alternatively, the tube may be made from a plate which is prepared from an aluminum brazing sheet coated with a brazing material layer over one side thereof by subjecting the coated side of the sheet to rolling work and which comprises two flat wall forming portions joined by a connecting portion, a side wall forming portion formed integrally with each of the flat wall forming portions and projecting upward from one side edge thereof opposite to the connecting portion, and a plurality of partition forming portions projecting upward from each flat wall forming portion integrally therewith and arranged at a spacing widthwise of the flat wall forming portion, by bending the plate to the shape of a hairpin at the connecting portion to cause the side wall forming portions to butt against each other and brazing the opposed portions of the plate to each other to form partition walls with the partition forming portions.

The corrugated fin 12 is made from an aluminum brazing sheet having a brazing material layer over opposite sides thereof by corrugating the sheet. The fin has a plurality of louvers which are formed in portions thereof connecting ridges to furrows and which are arranged in parallel in the forward or rearward direction. Each pair of aligned front and rear heat exchange tubes have the same corrugated fin 12 in common. The width of the fin 12 in the forward or rearward direction is approximately equal to the distance from the front edge of the heat exchange tube 9 in the front group 11 to the rear edge of the tube 9 in the rear group 11.

With the evaporator 1, suppose each of the heat exchange tubes 9 has a potential A at a surface layer portion from the outermost surface of the outer periphery thereof to a depth d (= 0.15 mm) and a potential B at a core thereof other than the surface layer portion, each of the corrugated fins 12 has a potential C, and a fillet formed at the brazed portion between the heat exchange tube 9 and the fin 12 has a potential D. These potentials then have the relationship of A ≤ C ≤ D < B as in the case of the condenser 50 described above. Thus, these potentials A to D are in the ranges of: the potential A, -850 to -800 mV; the potential B, -710 to -670 mV; the potential C, -850 to -800 mV; and the potential D, -850 to -800 mV. The alloy compositions of the surface layer portion and core of the heat exchange tube 9 and the alloy composition of the corrugated fin 12 are the same as in the refrigerant tube 53 and the corrugated fin 54 of the condenser 50 described. The alloy composition of the fillet formed at the brazed portion between the tube 9 and the fin 12 is also the same as that of the fillet 59 formed at the brazed portion between the refrigerant tube 53 and the fin 54 of the condenser 50.

The evaporator 1 is fabricated by tacking the components as assembled and collectively brazing all the components. The heat exchange tube members of the assembly each comprise a tubular main body and a Zn spray layer formed over the entire outer peripheral surface of the tubular main body as is the case with the refrigerant tube members 60 for making the condenser 50 described. The alloy composition of the tubular main body and the amount of Zn spray layer are the same as in the refrigerant tube member 60 of the condenser 50. Like the corrugated fin member 61 for making the condenser 50 described, the corrugated fin member of the assembly comprises a core and a cladding formed over each of opposite surfaces of the core. The alloy compositions of the core and the cladding and the cladding ratio of the cladding are the same as in the corrugated fin member 61 of the condenser 50.

The evaporator 1 provides a refrigeration cycle wherein a chlorofluorocarbon refrigerant is used, along with a compressor and a condenser, and is installed in vehicles, such as motor vehicles, for use in air conditioners.

While the heat exchangers according to the foregoing two embodiments are used as condensers or evaporators of air conditioners for use in vehicles, such as motor vehicles, which have a compressor, condenser and evaporator and wherein a chlorofluorocarbon refrigerant is used, the heat exchangers may by installed in motor vehicles for use as oil coolers or radiators.

The heat exchangers fabricated according to the process of the invention may be installed in vehicles, such as motor vehicles, for use as gas coolers or evaporators of air conditioners which have a compressor, gas cooler, intermediate heat exchanger, expansion valve and evaporator and wherein a CO₂ refrigerant is used.

### INDUSTRIAL APPLICABILITY

The heat exchangers fabricated according to the process of the present invention are suitable, for example, for use as condensers, evaporators or the like of motor vehicle air conditioners wherein a chlorofluorocarbon refrigerant is used.

## Claims

1. A process for fabricating a heat exchanger comprising brazing together a heat exchanger tube member (60) and a heat exchanger fin member (61), wherein the tube member comprises a tube member main body (60a) made from an Al alloy containing 0.3 to 0.6 mass % of Cu and 0.1 to 0.4 mass % of Mn, and the balance Al and inevitable impurities, and 2 to 8 g/m² of Zn spray layer (60b) formed over the entire outer peripheral surface of the tube member main body, wherein the fin member comprises a core (61a) made from an Al alloy containing 2.3 to 2.7 mass % of Zn and 1.1 to 1.3 mass % of Mn, and the balance Al and inevitable impurities, and a cladding (61b) covering at least one surface of the core and made from an Al alloy brazing filler containing 7.9 to 9.5 mass % of Si, 0.1 to 0.3 mass % of Cu and 0.1 to 0.3 mass % of Mn, and the balance Al and inevitable impurities.

2. The process according to claim 1, wherein the tube member main body of the heat exchanger tube member is made from an Al alloy containing 0.3 to 0.5 mass % of Cu and 0.1 to 0.3 mass % of Mn, and the balance Al and inevitable impurities.

3. The process according to claim 1, wherein the Zn spray layer of the heat exchanger tube member is formed in an amount of 2 to 6 g/m².

4. The process according to claim 1, wherein the cladding of the heat exchanger tube member is provided on one surface of the core in a cladding ratio of 8 to 12 %.

5. The process according to claim 1, wherein the cladding of the heat exchanger tube member is provided on one surface of the core in a cladding ratio of 9 to 11%.

## Patentansprüche

1. Verfahren zum Herstellen eines Wärmetauschers, umfassend:
Zusammenlöten eines Wärmetauscher-Rohrelementes (60) und eines Wärmetauscher-Rippenelementes (61), wobei das Rohrelement einen Rohrelementhauptkörper (60a) umfasst, der aus einer Al-Legierung, die 0,3 bis 0,6 Massen-% Cu und 0,1 bis 0,4 Massen-% Mn und den Rest Al und unvermeidbare Verunreinigungen enthält, und aus einer 2 bis 8 g/m² Zn-Sprayschicht (60b) hergestellt ist, die über die gesamte äußere Umfangsfläche des Rohrelementhauptköpers ausgebildet ist, wobei das Rippenelement einen Kern (61 a), der aus einer Al-Legierung hergestellt ist, die 2,3 bis 2,7 Massen-% Zn und 1,1 bis 1,3 Massen-% Mn und den Rest Al und unvermeidbare Verunreinigungen enthält, und eine Hülle (61 b) umfasst, die wenigstens eine Oberfläche des Kerns bedeckt und die aus einem Al-Legierungslötfüllstoff hergestellt ist, der 7,9 bis 9,5 Massen-% Si, 0,1 bis 0,3 Massen-% Cu und 0,1 bis 0,3 Massen-% Mn und den Rest Al und unvermeidbare Verunreinigungen enthält.

2. Verfahren nach Anspruch 1, wobei der Rohrelementhauptkörper des Wärmetauscher-Rohrelementes aus einer Al-Legierung hergestellt ist, die 0,3 bis 0,5 Massen-% Cu und 0,1 bis 0,3 Massen-% Mn und den Rest Al und unvermeidbare Verunreinigungen enthält.

3. Verfahren nach Anspruch 1, wobei die Zn-Sprayschicht des Wärmetauscher-Rohrelementes in einem Gehalt von 2 bis 6 g/m² ausgebildet ist.

4. Verfahren nach Anspruch 1, wobei die Hülle des Wärmetauscher-Rohrelementes auf einer Oberfläche des Kerns in einem Hüllverhältnis von 8 bis 12 % vorgesehen ist.

5. Verfahren nach Anspruch 1, wobei die Hülle des Wärmetauscher-Rohrelementes auf einer Oberfläche des Kerns in einem Hüllverhältnis von 9 bis 11 % vorgesehen ist.

## Revendications

1. Procédé pour fabriquer un échangeur de chaleur comprenant le brasage d'un élément de tube d'échangeur de chaleur (60) et d'un élément d'ailette d'échangeur de chaleur (61), dans lequel l'élément de tube comprend un corps principal d'éléments de tube (60a) fait d'un alliage de Al contenant 0,3 à 0,6 % en masse de Cu et 0,1 à 0,4 % en masse de Mn, et le reste de Al et d'impuretés inévitables, et 2 à 8 g/m² de couche de pulvérisation de Zn (60b) formée sur toute la surface périphérique externe du corps principal d'élément de tube, dans lequel l'élément d'ailette comprend un coeur (61a) fait d'un alliage de Al contenant 2,3 à 2,7 % en masse de Zn et 1,1 à 1,3 % en masse de Mn le reste de Al et d'impuretés inévitables, et un revêtement (61b) couvrant au moins une surface du coeur et fait d'un apport de brasage d'alliage de Al contenant 7,9 à 9,5 % en masse de Si, 0,1 à 0,3 % en masse de Cu et 0,1 à 0,3 % en masse de Mn, et le complément de Al et d'impuretés inévitables.

2. Procédé selon la revendication 1, dans lequel le corps principal d'élément de tube de l'élément de tube d'échangeur de chaleur est fait d'un alliage de Al contenant 0,3 à 0,5 % en masse de Cu et 0,1 à 0,3 % en masse de Mn, et le reste de Al et d'impuretés inévitables.

3. Procédé selon la revendication 1, dans lequel la couche de pulvérisation de Zn de l'élément de tube de l'échangeur de chaleur est formée en une quantité de 2 à 6 g/m².

4. Procédé selon la revendication 1, dans lequel le revêtement de l'élément de tube d'échangeur de chaleur est prévu sur une surface du coeur dans un rapport de placage de 8 à 12 %.

5. Procédé selon la revendication 1, dans lequel le revêtement de l'élément de tube d'échangeur de chaleur est prévu sur une surface du coeur dans un rapport de placage de 9 à 11 %.
